# EUROPÄISCHE PATENTSCHRIFT

(11) **EP 0 699 147 B1**
(45) Veröffentlichungstag und Bekanntmachung des Hinweises auf die Patenterteilung: **01.10.1997**
(21) Anmeldenummer: 94911942.4
(22) Anmeldetag: 22.03.1994
(51) Int. Cl.: B60T 8/44, B60T 8/48, B60T 13/16, B60T 13/74

(54) **HYDRAULISCHE BREMSANLAGE MIT SCHLUPFREGELUNG**
HYDRAULIC BRAKE SYSTEM WITH SLIP CONTROL
SYSTEME DE FREINAGE HYDRAULIQUE MUNI D'UN SYSTEME ANTI-PATINAGE

(30) Priorität: 27.03.1993 DE 4310061
(43) Veröffentlichungstag der Anmeldung: 06.03.1996
(73) Patentinhaber: ITT Automotive Europe GmbH, 60488 Frankfurt (DE)
(72) Erfinder: FEIGEL, Hans-Jörg, D-61191 Rosbach (DE); NEUMANN, Ulrich, D-64380 Ro dorf (DE); SCHIEL, Lothar, D-65719 Hofheim (DE)
(74) Vertreter: Hebing, Norbert
(86) Internationale Anmeldenummer: EP9400885
(87) Internationale Veröffentlichungsnummer: WO9422699

(56) Entgegenhaltungen:
- EP-A- 0 374 485
- EP-A- 0 379 329
- EP-A- 0 411 320
- EP-A- 0 422 457
- FR-A- 2 646 505
- GB-A- 2 129 890
- US-A- 5 161 865
- PATENT ABSTRACTS OF JAPAN vol. 10, no. 196 (M-497) (2252) 10. Juli 1986 & JP,A,61 041 654 (NIPPON DENSO) 28. Februar 1986
- PATENT ABSTRACTS OF JAPAN vol. 10, no. 70 (M-462) (2127) 19. März 1986 & JP,A,60 213 549 (NIPPON DENSO) 25. Oktober 1985
- PATENT ABSTRACTS OF JAPAN vol. 9, no. 46 (M-360) (1769) 27. Februar 1985 & JP,A,59 186 755 (MAZDA) 23. Oktober 1984

## Beschreibung

Die Erfindung betrifft eine hydraulische Bremsanlage mit Schlupfregelung nach dem Oberbegriff des Anspruchs 1.

Aus der Druckschrift DE 32 40 404 A1 ist bereits eine Bremsanlage mit Schlupfregelung für Kraftfahrzeuge hervorgegangen, die über einen dem Tandemhauptzylinder vorgeschalteten Bremskraftverstärker verfügt. Zwischen dem Tandemhauptzylinder und dem hydraulischen Bremskraftverstärker befindet sich im Gehäuse des Bremsdruckgebers ein Positionierungskolben, der während der Bremsschlupfregelung über eine entsprechende Ventil- und Schaltungsanordnung vom Druck einer Fremdenergiequelle dynamisch beaufschlagt ist, um gegen die Wirkung der manuell eingesteuerten Betätigungskraft die Druckstange und damit das Pedal auf einen jederzeit vollziehbaren Reservehub zu positionieren.

Das Schaltungskonzept der Bremsanlage zur Regelung des Bremsschlupfes ist im Hinblick auf das Erfordernis einer Vielzahl von Einlaß- und Auslaßventilen verbesserungswürdig. Bei bestimmten Betriebszuständen der Bremsanlage muß die Entspannung des Druckmittels in den drucklosen Nachlaufbehälter erfolgen, was zu Betriebsstörungen führen kann. Überdies ermöglicht die konstruktive Auslegung des Bremsdruckgebers keine unabhängig von der manuellen Einsteuerkraft ausführbare Servokraft-Steuerkennlinie, um bei Bedarf eine einfache Veränderung der Bremsencharakteristik vornehmen zu können. Auch das Verwenden eines relativ komplexen Hilfsdruckerzeugers (Motor- Pumpenaggregat) erweist sich als kostenintensiv.

Bei der gattungsbildenden Bremsanlage nach EP-A-0374485 ist der als elektrohydraulische Folgeverstärker ausgebildete Hauptbremszylinder über eine Kolbenstange mit einem Bremspedal verbunden. Die Kolbenstange beaufschlagt einen Hauptzylinderkolben, über den wiederum eine Bremskammer unter Bremsdruck setzbar ist. Bremsflüssigkeit gelangt über Bremsleitungen zu dem entsprechenden Radbremszylinder. Dem Hauptzylinderkolben ist ein Servokolbenraum zugeordnet, der über Magnetventile mit einem Druckmittelspeicher und einer in den Druckmittelspeicher fördernden Pumpe verbunden. Ferner ist im Bypass zur Pumpe ein Druckbegrenzungsventil geschaltet, so daß eine aus den Magnetventilen, dem Druckspeicher, einem Rückschlagventil und dem Druckbegrenzerventil mit der Pumpe gebildete Hilfsdruckquelle, das Druckmittel eines mit dem Bremsdruckgeber in Verbindung stehenden Nachlaufbehälter entweder dem Servokolbenraum oder zurück zum Nachlaufbehälter fördert. Die Magnetventile der Hilfsdruckquelle werden über einen die Bewegung der Kolbenstange erfassenden Weggeber gesteuert. Ferner ist aber auch dem Hauptzylinderkolben ein Weggeber zugeordnet, welcher unabhängig von der Bewegung der Kolbenstange die tatsächliche Bewegung des Hauptzylinderkolbens erfaßt und über den gleichfalls die Magnetventile für die Steuerung der Hilfsdruckquelle mittels einer Elektronik betätigt werden können. Der für die Bereitstellung des Hilfsdrucks im Bremsdruckgeber erforderliche schaltungstechnische und bauliche Aufwand ist von Nachteil. Schadhafte Magnetventile der Hilfsdruckquelle führen zu einem Ausfall des Servodrucks für den Bremsdruckgeber.

Daher ist es die Aufgabe der Erfindung, unter Umgehung der vorgenannten Nachteile eine Bremsanlage mit Schlupfregelung zu schaffen, die sich durch einen einfachen, kostengünstigen und dennoch funktionssicheren Aufbau einer Hilfsdruckquelle vielseitig verwenden läßt und einen geringen Energieverbrauch aufweist.

Diese Aufgaben werden erfindungsgemäß durch die den Patentanspruch 1 kennzeichnenden Merkmale gelöst.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand einer Zeichnung näher dargestellt und erläutert werden.

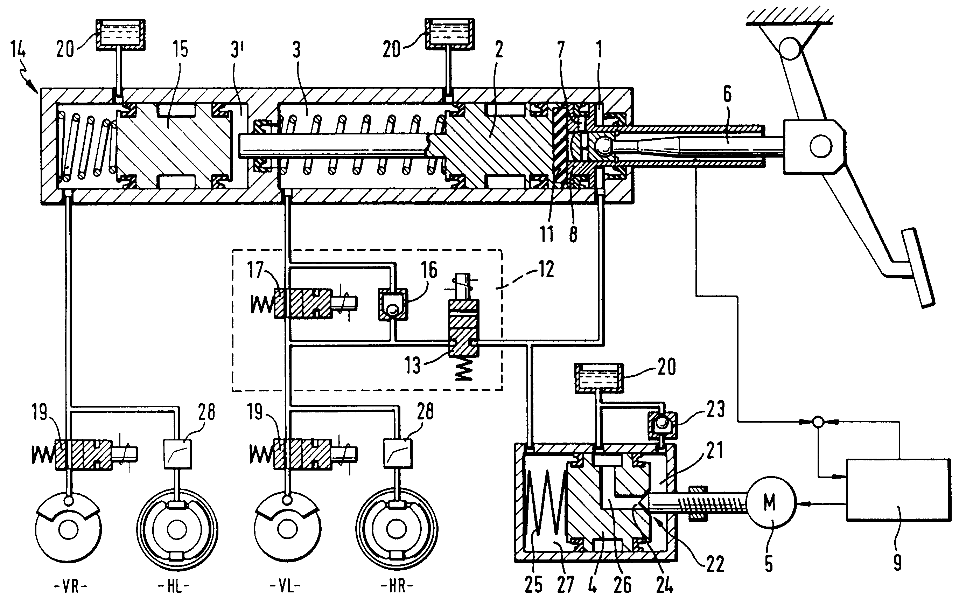

Die Abbildung nach Figur 1 zeigt in baulich vereinfachter Darstellung eine Ausführungsform der Erfindung. Die Bremsanlage ist mit einer Diagonal-Bremskreisaufteilung ausgeführt. Das Gehäuse des Bremsdruckgebers 14 weist zwei Arbeitskolben 2, 15 in Tandemanordnung auf, die mittels einer in einem Verstärkerkolben 8 geführten Druckstange 6 betätigbar sind. Ein erster, dem Verstärkerkolben 8 und der Druckstange 6 zugewandter Arbeitskolben 2 ist innerhalb eines ersten Druckraums des Bremsdruckgebers 14 angeordnet, wobei der erste Druckraum in eine Kammer 3 und in eine den Verstärkerkolben 8 aufnehmende Verstärkerkammer 1 unterteilt ist. Die beiden Kammern 1, 3 sind mittels einer Ventil- und dementsprechend hydraulischen Schaltungsanordnung 12 mit einer weiteren Kammer 3' verbindbar, in der ein weiterer Arbeitskolben eingesetzt ist. Ferner schließt sich an diese Schaltungsanordnung 12 eine aus einem Stellantrieb 5 und aus einem Schwimmkolben 4 gebildetete Hilfsdruckquelle an. Die Druckstange 6 ist innerhalb eines hülsenförmigen Kolbenabschnittes des Verstärkerkolbens 8 geführt. Der Verstärkerkolben 8 weist sowohl am hülsenförmigen Kolbenabschnitt wie auch am vergrößerten Verstärkerkolben eine Abdichtung auf, so daß die Verstärkerkammer 1 leckagefrei gedichtet ist. Über eine zwischen dem Verstärkerkolben 8 und dem Arbeitskolben 2 eingebettete Gummireaktionsscheibe 11 erfolgt die Bremsdruckeinsteuerung im Sinne einer für das manuelle Betätigungsgefühl zweckmäßigen Springercharakteristik. Die Druckstangenbetätigung wird von einer Sensoreinrichtung 7, beispielsweise mittels Hallsensor und Permanentmagnet, durch die elektronische Verarbeitung der Ausgangssignale des Sensors in der Steuer- und Regelelektronik 9 erfaßt, wobei das Erfordernis einer gesonderten Elektronik entfallen kann, wenn die Verarbeitung der Ausgangssignale innerhalb der für den ABS-/ASR-Bremsenbetrieb vorhandenen Steuer- und Regelelektronik 9 geschieht. Der Positionssensor der Sensoreinrichtung 7 befindet sich gemäß Ausführungsbeispiel im Bereich zwischen dem Verstärkerkolben 8 und der Druckstange 6 angeordnet. Das vom Positionssensor erfaßte Bewegungssignal wird durch die peripher angeordnete Steuer- und Regelelektronik 9 ausgewertet, die bei einer Regelabweichung den Schwimmkolben 4 aktiviert. Im Hinblick auf die Zuverlässigkeit und Sicherheit des Bremssystems sind die Steuer- und Regelelektronik 9 und die Sensoreinrichtung 7 vorzugsweise redundant ausgeführt. Die Elektronik übernimmt nicht nur die Steuerung und Regelung der Bremskraftverstärkerfunktion, sondern kann infolge der vorgeschlagenen hydraulischen Schaltungsanordnung 12 gleichfalls bei Bedarf auch die ABS-/ASR-Funktion bewirken. Als Stellantrieb 5 für den Schwimmkolben 4 wird stellvertretend für eine Vielzahl von Antriebsmitteln ein als Spindelantrieb ausgeführter elektrischer Rotationsantrieb vorgeschlagen, der zwecks Gewährleistung einer ungehinderten Rückstellbewegung des Schwimmkolbens 4 nicht selbsthemmend ausgeführt ist. Dieser Stellantrieb 5 zeichnet sich durch einen hohen Wirkungsgrad sowie durch kleine, leichte Bauweise aus. Nach Wunsch oder Bedarf können jedoch alternativ Vakuum-, Druckluft- oder Hydraulikantriebe verwendet werden. Besonders eignen sich pneumatische Linearantriebe mit elektrisch ansteuerbaren Ventilen sowie elektrische Linearantriebe. Um die thermische und elektrische, energetische Beanspruchung des Stellantriebs 5 möglichst gering zu halten, ist eine Blockiereinrichtung zur Aufrechterhaltung einer Haltekraft vorgesehen, wozu sich erfindungsgemäß ein flüssigkeitsgefüllter, absperrbarer Druckraum 21 eignet. Der Druckraum 21 befindet sich unmittelbar hinter dem Schwimmkolben 4 und ist über ein Rückschlagventil 23 bzw. über ein am Stellantrieb 5 angebrachter und auf den Schwimmkolben 4 wirksamer Schließkörper 24 mit dem Nachlaufbehälter 20 verbindbar. Der Stellantrieb 5 weist eine Drehrichtungsumkehr auf, um bei Bedarf die Druckmittelverbindung zwischen dem Druckraum 21 und dem Nachlaufbehälter 20 über einen Kanal im Schwimmkolben 4 herzustellen.

Eine weitere Ausgestaltung des Erfindungsgedankens sieht vor, daß zur Messung der Schwimmkolben- oder Spindelposition ein Sensor vorgesehen ist. Ferner kann durch Verwendung eines Sensors zur Erfassung des Schwenkwinkels des elektrischen Rotationsmotors aus der Ansteuercharakteristik des Stellantriebs auf den im Bremssystem herrschenden Druck geschlossen werden, was der Bremsdruckregelung förderlich ist. Hierzu würde sich auch ein Sensor zur Erfassung des vom Stellantrieb 5 aufgenommenen elektrischen Stroms eignen.

Nachfolgend wird die Funktionsweise der erfindungsgemäßen Bremsanlage erläutert. Alle in der Figur 1 gezeigten Elemente sind der Bremslösestellung zugeordnet. Die Normalbremsfunktion erfolgt auf an sich bekannte Weise durch manuelle Betätigung der Druckstange 6. Die Bewegung der Druckstange 6 wird durch die Sensoreinrichtung 7 permanent erfaßt und innerhalb der Steuer- und Regelelektronik 9 anhand der Solldaten überwacht. Innerhalb der zulässigen Radschlupfschwelle bleibt das in der hydraulischen Schaltungsanordnung 12 befindliche Sperr- und Einlaßventil 13, 17 elektromagnetisch unerregt, wobei der Stellantrieb 5 und der Schwimmkolben 4 bei einer Regelabweichung von den Solldaten der gewünschten Verstärkercharakteristik aktiviert werden. Bei inaktivem Stellantrieb ist zunächst ein mechanischer Durchtrieb entsprechend einer konventionellen Bremsanlage vorhanden. Infolge der Sensor-Signalauswertung in der Steuer- und Regelelektronik 9 wird nach Bedarf die hydraulische Verstärkerfunktion über die Stellgröße für den Stellantrieb 5 elektrohydraulisch variiert. Diesbezüglich erfüllt dann das vom Schwimmkolben 4 unmittelbar in die Verstärkerkammer 1 eingespeiste Druckmittelvolumen den gewünschten Verstärkerdruck. Die Minderung des Verstärkerdrucks geschieht durch einen Reversiervorgang des Stellantriebs 5, wodurch der Schwimmkolben 4 druckentlastet wird. Im konkreten Ausführungsbeispiel geschieht dies durch eine Drehrichtungsumkehr des Spindelmotors, wodurch der am Spindelantrieb als Absperrventil 22 wirksame konische Schließkörper 24 die jeweils im Druckraum 21 wirksame Haltekraft durch Rückströmen von Druckmittel über einen im Schwimmkolben 4 angebrachten Kanal 26 zum Nachlaufbehälter 20 reduziert. Der Schwimmkolben 4 kann damit unter Wirkung der Feder 25 einen Schwimmkolben-Rückhub vollziehen, der zu einer Vergrößerung der Volumenaufnahme im Modulatorraum 27 führt.

Sobald die Steuer- und Regelelektronik 9 in der Betriebsbremsstellung mittels weiterer Sensoren zur Erfassung der Raddrehzahlen unzulässig hohe Bremsschlupfwerte erkennt, wird die durch Druckhalte-, Druckabbau- und Druckaufbauphasen gekennzeichnete Bremsdruckmodulation (ABS-Modus) aktiviert. Zum Ausfiltern von Störgrößen und damit zum Erzeugen der Druckhaltefunktion in beiden Bremskreisdiagonalen wird das normalerweise geöffnete Einlaßventil 17 elektromagnetisch geschlossen, wodurch das in der Kammer 3 eingesperrte Druckmittelvolumen zu einer hydraulischen Verriegelung der Druckstange 6 und damit zu einer Begrenzung der momentan eingesteuerten manuellen Bremskraftbetätigung führt. Währenddessen bleiben von dieser Maßnahme das Sperrventil 13 und der Schwimmkolben 4 unberührt in der abbildungsgemäßen inaktiven Position.

Zur Einleitung der Druckabbauphase öffnet bei gleichzeitig noch geschlossenem Einlaßventil 17 das Sperrventil 13 die hydraulische Verbindung des normalerweise mit den Kammern 3, 3' in Verbindung stehenden Bremskreises in Richtung zur Verstärkerkammer 1 und zum Schwimmkolben 4. Durch die Druckentlastung der Kammer 3' wird gleichfalls der Arbeitskolben 15 druckentlastet, so daß auch im angeschlossenen Bremskreis der Druck in Richtung des am Bremsdruckgeber angebrachten Nachlaufbehälters 20 reduziert werden kann. Der hydraulische Druck des weiteren Bremskreises, der an der Schaltungsanordnung 12 unmittelbar angeschlossen ist, entweicht während der Druckabbauphase in den erweiterten Modulatorraum 27, sofern infolge des durch den Stellantrieb 5 eingeleiteten Reversiervorgangs der Schließkörper 24 am Spindelantrieb den Druckmittelrücklauf aus dem Druckraum 21 über den Kanal 26 zum Nachlaufbehälter 20 herstellt. Die manuell über die Druckstange 6 auf den Arbeitskolben 2 eingeleitete Betätigungskraft (Fußkraft) ist durch die Sperrstellung des Einlaßventils 17 und damit durch das Absperren der Kammer 3 unwirksam.

Die radindividuelle Regelung des Bremsdruckverlaufs in den Vorderradbremsen VR, VL geschieht mittels elektromagnetisch betätigbaren, stromlos offenen 2/2-Wegeventilen 19. Diese Ventile werden während der Druckhaltephase elektromagnetisch in Sperrstellung geschaltet und befinden sich während der Druckaufbau- und Druckabbauphase in der elektromagnetisch nicht erregten offenen Grundposition. Der Bremsdruck der Hinterradbremsen HL, HR ist im vorliegenden Fall im Bereich zulässiger Schlupfwerte über die feste Aussteuerkennlinie zweier konventioneller Bremskraftregler 28 festgelegt. Im ABS-Modus hingegen ist der Druckverlauf in den Hinterradbremsen durch die Betriebsweise des Einlaßventils 17 und des Sperrventils 13 sowie von der Aktivierung des Schwimmkolbens 4 abhängig. Hieraus folgt für die Hinterachsbremsen HL, HR, daß in der Druckabbauphase beide Hinterradbremsen durch Schließen des Einlaßventils 17 (Arbeitskolben 2, Verstärkerkolben 1 sind hydraulisch gesperrt), und Öffnen des Sperrventils 13 diese druckentlastet werden, sobald der Schwimmkolben 4 eine Rückstellbewegung vollzieht. Druckmittel wird unmittelbar aus der Verstärkerkammer 1, der Kammer 3' des weiteren Arbeitskolbens 15 und aus der Hinterradbremse HR des Druckstangenbremskreises abgesaugt.

Zur Realisierung der Druckaufbauphase in den beiden Hinterradbremsen wird das vom Schwimmkolben 4 aus dem Modulatorraum 27 verdrängte Druckmittelvolumen über das offene Sperrventil 13 sowohl in den Druckstangenbremskreis wie auch in die zur hydraulischen Betätigung des weiteren Arbeitskolbens 15 notwendige Kammer 3' eingespeist. Mit Beendigung der manuell eingesteuerten. Bremsbetätigungsphase kehren sich die Schaltungszustände des Einlaß- und Sperrventils 17, 13 wieder um, so daß diese Ventile wieder in ihre ursprüngliche Grundstellung gelangen.

Aus Sicherheitsgründen ist parallel zum Einlaßventil 17 ein in Richtung der Kammer 3 öffnendes Rückschlagventil 16 angeordnet, um bei einem Verklemmen des Einlaßventils 17 in der Sperrstellung unter allen Umständen eine manuell gesteuerte Druckentlastung der Radbremsen zu ermöglichen.

Die Schaltung der erfindungsgemäßen Bremsanlage nach Figur 1 eignet sich nicht nur zur Realisierung einer kennfeldadaptiven Bremskraftverstärkerfunktion und zum Einsatz als Bremsschlupfregler, sondern auch zur Regelung des Antriebsschlupfes, indem ohne besonderen Aufwand der Bremsbetätigungsdruck in den Radbremsen der angetriebenen Fahrzeugräder durch das elektronische Ansteuern des Stellantriebes 5 bestimmt werden kann, sobald zusätzliche elektromagnetisch betätigbare Sperrventile in den Bremsleitungszweigen der nicht angetriebenen Fahrzeugräder vorgesehen sind, die in Figur 1 nicht explizit dargestellt wurden. Folglich wird im ASR-Modus der Arbeitskolben 2 mit dem Verstärkerkolben 8 durch die Aktivierung des Stellantriebs 5 hydraulisch beaufschlagt. Das Einlaßventil 17 verharrt geöffnet, während das Sperrventil 13 geschlossen bleibt. Druckmittel aus dem Modulatorraum 27 gelangt ausschließlich in die Verstärkerkammer 1, so daß der zur ASR-Regelung erforderliche Druck auf die beiden Arbeitskolben 2, 15 und damit auf die Radbremsen der angetriebenen Fahrzeugräder wirken kann, während die Radbremsen der nicht angetriebenen Fahrzeugräder durch vorzugsweise elektromagnetisch betätigbare Wegeventile von der Druckregelung getrennt sind.

### Bezugszeichenliste

- 1: Verstärkerkammer
- 2: Arbeitskolben
- 3, 3': Kammer
- 4: Schwimmkolben
- 5: Stellantrieb
- 6: Druckstange
- 7: Sensoreinrichtung
- 8: Verstärkerkolben
- 9: Steuer- und Regelelektronik
- 10: -
- 11: Gummireaktionsscheibe
- 12: Schaltungsanordnung
- 13: Auslaßventil
- 14: Bremsdruckgeber
- 15: Arbeitskolben
- 16: Rückschlagventil
- 17: Einlaßventil
- 18: -
- 19: 2/2-Wegeventil
- 20: Nachlaufbehälter
- 21: Druckraum
- 22: Auslaßventil
- 23: Rückschlagventil
- 24: Schließkörper
- 25: Feder
- 26: Kanal
- 27: Modulatorraum
- 28: Bremskraftregler

## Patentansprüche

1. Hydraulische Bremsanlage mit Schlupfregelung, insbesondere für Kraftfahrzeuge, mit wenigstens einen im Bremsdruckgeber (14) geführten Arbeitskolben (2,15), mit einem Verstärkerkolben (8) eines hydraulischen Bremskraftverstärkers zur Betätigung des Arbeitskolbens (2,15), mit mindestens einer am Bremsdruckgeber (14) angeschlossenen Radbremse sowie mit einer am Bremskraftverstärker angeschlossenen, elektrisch ansteuerbaren Hilfsdruckquelle, mit einer Steuer- und Regelelektronik (9) zum Erfassen des Raddrehverhaltens und zur Steuerung des Radbremsdrucks mittels Druckmodulationsventilen, wobei eine elektronische Sensoreinrichtung (7) zur Erfassung der Relativbewegung zwischen einer Druckstange (6) im Bremsdruckgeber (14) und dem Verstärkerkolben (8) vorgesehen ist, durch deren Ausgangssignale die Ansteuerung der Hilfsdruckquelle beeinflußbar ist,
**dadurch gekennzeichnet**, daß die elektrisch ansteuerbare Hilfsdruckquelle aus einem die Volumenaufnahme eines Bremskreises in einem Modulatorraum (27) beeinflussenden Schwimmkolben (4) und einem Stellantrieb (5) besteht, daß die Hilfsdruckquelle mit einer Blockiereinrichtung zur Aufrechterhaltung einer Haltekraft versehen ist, daß die Blockiereinrichtung durch einen flüssigkeitsgefüllten, absperrbaren Druckraum (21) gebildet ist, dessen Innendruck die erforderliche Haltekraft bewirkt, daß die Blockiereinrichtung eine erste hydraulische Verbindung zwischen dem Druckraum (21) und einem Nachlaufbehälter (20) aufweist, in der ein in Richtung des Druckraums (21) öffnenden Rückschlagventil (23) eingesetzt ist, und daß eine zweite hydraulische Verbindung zwischen dem Druckraum (21) und dem Nachlaufbehälter (20) mittels eines elektrisch ansteuerbaren Absperrventils (22) herstellbar ist.

2. Hydraulische Bremsanlage nach Anspruch 1, **dadurch gekennzeichnet**, daß die Verarbeitung des Ausgangssignals der elektronischen Sensoreinrichtung (7) in der Steuer- und Regelelektronik (9) erfolgt.

3. Hydraulische Bremsanlage nach Anspruch 1 oder 2, dadurch **gekennzeichnet**, daß die elektronische Sensoreinrichtung (7) an der Druckstange (6) angeordnet ist und relativ zum Bremsdruckgeber (14) mitgeführt ist.

4. Hydraulische Bremsanlage nach einem der vorhergehenden Ansprüche, dadurch **gekennzeichnet**, daß die elektronische Sensoreinrichtung (7) aus einem Hallsensor und einem Permanentmagnet besteht.

5. Hydraulische Bremsanlage nach Anspruch 1, **dadurch gekennzeichnet**, daß der flüssigkeitsgefüllte Druckraum (21) auf der vom Modulatorraum (27) abgewandten Stirnseite des Schwimmkolbens (4) unmittelbar hinter dem Schwimmkolben (4) angeordnet ist.

6. Hydraulische Bremsanlage nach Anspruch 1, **dadurch gekennzeichnet**, daß das Absperrventil (22) im Bereich der Kraftübertragung des Stellantriebs (5) auf den Schwimmkolben (4) angeordnet ist und daß ein Schließkörper (24) des Absperrventils (22) mit dem Stellantrieb (5) verbunden ist, und daß dem Ventilsitz des Schließkörpers (24) stirnseitig im Schwimmkolben (4) einen mit dem Nachlaufbehälter (20) in Verbindung stehenden Kanal (26) begrenzt.

7. Hydraulische Bremsanlage nach Anspruch 6, **dadurch gekennzeichnet**, daß der Stellantrieb (5) eine Rückhubsteuerung aufweist, die durch eine Drehrichtungsumkehr des Stellantriebs entgegen der Kraft einer Feder (25) wirksam ist.

8. Hydraulische Bremsanlage nach Anspruch 5, **dadurch gekennzeichnet**, daß der Stellantrieb durch einen elektrischen Rotationsantrieb mit Spindelantrieb gebildet ist.

9. Hydraulische Bremsanlage nach Anspruch 1, **dadurch gekennzeichnet**, daß zwischen dem Verstärkerkolben (8) und einem unmittelbar dem Verstärkerkolben (8) zugeordneten Arbeitskolben (2) eine Gummireaktionsscheibe (11) angeordnet ist.

## Claims

1. A hydraulic braking system with slip control, in particular for automotive vehicles, comprising at least one working piston (2,15) guided in the brake pressure generator (14), a booster piston (8) of a hydraulic brake force booster for actuating the working piston (2,15), at least one wheel brake connected to the brake pressure generator (14) and an electrically actuatable auxiliary pressure source connected to the brake force booster, a control and regulator electronic assembly (9) for detecting the wheel rotating pattern and for controlling the wheel brake pressure by means of pressure modulating valves, wherein an electronic sensor means (7) is provided for detecting the relative movement between a pressure rod (6) in the brake pressure generator (14) and the booster piston (8), the output signals of which means (7) permit influencing the actuation of the auxiliary pressure source,
characterized in that the electrically actuatable auxiliary pressure source includes a floating piston (4), which influences the volume input of a brake circuit in a modulator chamber (27), and a servo drive (5), in that the auxiliary pressure source includes a locking means for maintaining a holding force, in that the locking means is a fluid-filled blockable pressure chamber (21), the internal pressure of which chamber generates the required holding force, in that the locking means establishes a first hydraulic connection between the pressure chamber (21) and an intake reservoir (20) in which is inserted a check valve (23) opening toward the pressure chamber (21), and in that a second hydraulic connection can be established between the pressure chamber (21) and the intake reservoir (20) by means of an electrically actuatable shut-off valve (22).

2. A hydraulic braking system as claimed in claim 1, characterized in that the output signal of the electronic sensor means (7) is processed in the control and regulator electronic assembly (9).

3. A hydraulic braking system as claimed in claims 1 or 2, characterized in that the electronic sensor means (7) is located on the pressure rod (6) and is entrained relative to the brake pressure generator (14).

4. A hydraulic braking system as claimed in any one of the preceding claims, characterized in that the electronic sensor means (7) is configured as a Hall-type sensor and a permanent magnet.

5. A hydraulic braking system as claimed in claim 1, characterized in that the fluid-filled pressure chamber (21) on the front side of the floating piston (4) facing away from the modulator chamber (27) is arranged directly behind the floating piston (4).

6. A hydraulic braking system as claimed in claim 1, characterized in that the shut-off valve (22) is arranged in the area of the force transmission of the servo drive (5) on the floating piston (4), and in that a closure member (24) of the shut-off valve (22) is connected to the servo drive (5), and in that the valve seat of the closure member (24) on the front side, in the floating piston (4), confines a passageway (26) in communication with the intake reservoir (20).

7. A hydraulic braking system as claimed in claim 6, characterized in that the servo drive (5) contains a backstroke control effective by a reversal of the direction of rotation of the servo drive in opposition to the action of a spring (25).

8. A hydraulic braking system as claimed in claim 5, characterized in that the servo drive is configured as an electric rotary drive with a spindle drive.

9. A hydraulic braking system as claimed in claim 1, characterized in that a rubber reaction disk (11) is interposed between the booster piston (8) and a working piston (2) directly associated with the booster piston (8).

## Revendications

1. Système de freinage hydraulique à régulation du glissement, notamment pour véhicule automobile, comprenant au moins un piston de travail (2, 15), guide dans le générateur de pression de freinage (14), un piston d'amplificateur (8) d'un amplificateur de force de freinage hydraulique, servant à actionner le piston de travail (2, 15), au moins un frein de roue, raccordé au générateur de pression de freinage (14), une source de pression auxiliaire, raccordée à l'amplificateur de force de freinage et agencée de façon à pouvoir être commandée électriquement, et un circuit électronique de commande et de régulation (9) servant à relever le comportement des roues en rotation et à commander la pression de frein de roue au moyen de valves de modulation de pression, tandis qu'il est prévu un dispositif capteur électronique (7) qui sert à relever le déplacement relatif entre une tige de poussée (6) disposée dans le générateur de pression de freinage (14) et le piston d'amplificateur (8) et dont les signaux de sortie peuvent influer sur l'opération de commande de la source de pression auxiliaire, caractérisé en ce que la source de pression auxiliaire agencée de façon à pouvoir être commandée électriquement est constituée d'un piston flottant (4), qui exerce une influence sur le volume d'un circuit de frein qui est accepté par une chambre de modulateur (27), et d'un entraînement de réglage (5), en ce que la source de pression auxiliaire est pourvue d'un dispositif de blocage servant à conserver une force de maintien, en ce que le dispositif de blocage est formé d'une chambre de pression (21) qui est remplie de liquide et est agencée de façon à pouvoir être bloquée et dont la pression intérieure exerce la force de maintien nécessaire, en ce que le dispositif de blocage comprend une première liaison hydraulique qui est prévue entre la chambre de pression (21) et un réservoir d'équilibre (20) et dans laquelle est montée une valve antiretour (23) s'ouvrant en direction de la chambre de pression (21) et en ce qu'une seconde liaison hydraulique peut être réalisée entre la chambre de pression (21) et le réservoir d'équilibre (20) au moyen d'une valve de blocage (22) agencée de façon à pouvoir être commandée électriquement.

2. Système de freinage hydraulique selon la revendication 1, caractérisé en ce que le traitement du signal de sortie du dispositif capteur électronique (7) est effectué dans le circuit électronique de commande et de régulation (9).

3. Système de freinage hydraulique selon la revendication 1 ou 2, caractérisé en ce que le dispositif capteur électronique (7) est disposé sur la tige de poussée (6) et est entraîné avec cette dernière vis-à-vis du générateur de pression de freinage (14).

4. Système de freinage hydraulique selon l'une des revendications précédentes, caractérisé en ce que le dispositif capteur électronique (7) est constitué d'un capteur Hall et d'un aimant permanent.

5. Système de freinage hydraulique selon la revendication 1, caractérisé en ce que la chambre de pression (21) remplie de liquide est disposée directement derrière le piston flottant (4), sur la face frontale du piston flottant (4) qui est située à l'opposé de la chambre de modulateur (27).

6. Système de freinage hydraulique selon la revendication 1, caractérisé en ce que la valve de blocage (22) est disposée dans la zone de la transmission de force de l'entraînement de réglage (5) sur le piston flottant (4), en ce qu'un obturateur (24) de la valve de blocage (22) est relié à l'entraînement de réglage (5) et en ce que le siège de valve de l'obturateur (24) délimite, dans la face frontale du piston flottant (4), un conduit (26) qui communique avec le réservoir d'équilibre (20).

7. Système de freinage hydraulique selon la revendication 6, caractérisé en ce que l'entraînement de réglage (5) comprend une commande à course de retour qui agit à l'encontre de la force d'un ressort (25) sous l'effet d'une inversion du sens de rotation de l'entraînement de réglage.

8. Système de freinage hydraulique selon la revendication 5, caractérisé en ce que l'entraînement de réglage est constitué d'un entraînement électrique en rotation comportant un entraînement de vis sans fin.

9. Système de freinage hydraulique selon la revendication 1, caractérisé en ce qu'un disque de réaction (11) en caoutchouc est disposé entre le piston d'amplificateur (8) et un piston de travail (2) associé directement au piston d'amplificateur (8).
